# EUROPÄISCHE PATENTSCHRIFT

(11) **EP 3 697 544 B1**
(45) Veröffentlichungstag und Bekanntmachung des Hinweises auf die Patenterteilung: **06.03.2024**
(21) Anmeldenummer: 18795371.6
(22) Anmeldetag: 22.10.2018
(51) Int. Cl.: B08B 9/28, B08B 9/46, B08B 5/02, B08B 5/04, B08B 15/04, F26B 9/00, F26B 21/00, F26B 21/04, G01N 21/90, B05B 1/00

(54) **INSPEKTIONSVORRICHTUNG UND INSPEKTIONSVERFAHREN FÜR BEHÄLTNISSE MIT BODENGEBLÄSE**
CONTAINER INSPECTION APPARATUS AND METHOD WITH FLOOR FAN
DISPOSITIF ET PROCÉDÉ D'INSPECTION DE RÉCIPIENTS AVEC SOUFFLEUR D'AIR POUR FOND DE RÉCIPIENT

(30) Priorität: 20.10.2017 DE 102017124578
(43) Veröffentlichungstag der Anmeldung: 26.08.2020
(73) Patentinhaber: KRONES AG, 93073 Neutraubling (DE)
(72) Erfinder: SIGL, Michael, 93073 Neutraubling (DE); DÜNZINGER, Bernhard, 93073 Neutraubling (DE)
(74) Vertreter: Hannke Bittner & Partner mbB Regensburg
(86) Internationale Anmeldenummer: PCT/EP2018/078860
(87) Internationale Veröffentlichungsnummer: WO 2019/077161

(56) Entgegenhaltungen:
- EP-A1- 2 796 269
- DE-A1-102008 032 123
- DE-A1-102011 015 069
- DE-U1- 9 401 926
- DE-U1- 20 317 458
- FR-A- 994 861
- US-A1- 2009 101 178

## Beschreibung

Die vorliegende Erfindung bezieht sich auf eine Vorrichtung zum Behandeln von Behältnissen und insbesondere eine Inspektionseinrichtung zum Inspizieren von Behältnissen. Aus dem Stand der Technik sind zahlreiche Inspektionsvorrichtungen für Behältnisse bekannt. So ist es bekannt, dass Behältnisse beispielsweise vor einer neuen Abfüllung dahingehend geprüft werden, ob sich Fremdkörper oder auch Fremdflüssigkeiten in dem Behältnis befinden. Dabei kann das Problem auftreten, dass die Behältnisse an ihrer Außenoberfläche noch mit Resten, beispielsweise Schaumresten oder auch Schmiermitteln wie Bandschmiermitteln, behaftet sind.

Aus dem internen Stand der Technik der Anmelderin ist es daher bekannt, dass Behältnisse mit Druckluft abgeblasen werden, wobei die Druckluft hier getaktet oder dauernd erzeugt wird. Dies führt allerdings zu einem sehr hohen Druckluftverbrauch und damit auch einem hohen Energieverbrauch. Auch sind teilweise die Behältnisse nicht komplett frei von Wasser, Bandschmiermittel oder Schaum. Auf diese Weise kann es zur Wasser- oder Schaumverschleppung beispielsweise auf die Schutzgläser einer nachfolgenden Bodeninspektion kommen, sodass diese auf Dauer beeinträchtigt wird.

Der vorliegenden Erfindung liegt daher die Aufgabe zugrunde, eine energieeffizientere Möglichkeit zu schaffen, um Behältnisse von Resten, wie beispielsweise Schaum usw. zu befreien. Dies wird erfindungsgemäß durch die Gegenstände der unabhängigen Patentansprüche erreicht. Vorteilhafte Ausführungsformen und Weiterbildungen sind Gegenstand der Unteransprüche.

Das Dokument EP-A1-2796269 offenbart eine Vorrichtung zum Behandeln von Behältnissen gemäß dem Oberbegriff des Anspruchs 1 und ein Verfahren zum Behandeln von Behältnissen gemäß dem Oberbegriff des Anspruchs 10.

Eine erfindungsgemäße Vorrichtung zum Behandeln von Behältnissen weist eine Transporteinrichtung auf, welche die Behältnisse entlang eines vorgegebenen Transportpfads transportiert. Weiterhin weist die Vorrichtung eine Außenreinigungseinrichtung auf, welche dazu geeignet und bestimmt ist, wenigstens einen Bereich der Außenoberfläche des Behältnisses zu reinigen. Dabei weist die Außenreinigungseinrichtung eine Beaufschlagungseinrichtung auf, welche den Bereich der Außenoberfläche mit Luft beaufschlagt. Erfindungsgemäß weist die Beaufschlagungseinrichtung ein Gebläse auf. Während im internen Stand der Technik der Anmelderin wie oben erwähnt Druckluftdüsen eingesetzt werden, welche einen hohen Energieaufwand erfordern, wird im Rahmen der Erfindung vorgeschlagen, die Abblasung der Bereiche des Behältnisses mittels eines Gebläses vorzunehmen. Vorteilhaft ist dieses Gebläse stationär angeordnet und die Behältnisse bewegen sich gegenüber diesem Gebläse. Es wäre jedoch auch möglich, dass sich das Gebläse mit den jeweiligen Behältnissen mitbewegt.

Bevorzugt ist die Transporteinrichtung dazu geeignet und bestimmt, die Behältnisse vereinzelt zu transportieren. So kann diese Transporteinrichtung Halte- oder Greifeinrichtungen aufweisen, welche jeweils dazu geeignet und bestimmt sind, die einzelnen Behältnisse zu halten oder zu greifen, wobei diese Halte- oder Greifeinrichtungen sich bevorzugt mit den Behältnissen entlang eines vorgegebenen Transportpfads bewegen.

Bei einer weiteren bevorzugten Ausführungsform handelt es sich bei den Behältnissen um Kunststoffbehältnisse oder Glasbehältnisse.

Besonders bevorzugt weist das besagte Gebläse als Antrieb einen Elektromotor auf. Gemäß der Erfindung weist das Gebläse eine Hochdruckturbine auf. Vorteilhaft wird dabei diese Hochdruckturbine mit einer Umdrehungszahl betrieben, die größer ist als 10.000 Umdrehungen pro Minute, bevorzugt größer als 25.000Umdrehungen pro Minute und besonders bevorzugt größer als 30.000U/min und besonders bevorzugt etwa 35.000 U/min. Besonders bevorzugt wird diese Hochdruckturbine mit einer Umdrehungszahl betrieben, die kleiner ist als 50.000 Umdrehungen pro Minute, bevorzugt kleiner als 40.000 Umdrehungen pro Minute.

Dabei ist es möglich, dass die Hochdruckturbine direkt von einem Motor beispielsweise mit einem Direktantrieb angetrieben wird. Bevorzugt weist die Beaufschlagungseinrichtung einen bürstenlosen Motor besonders bevorzugt mit integrierter Motoransteuerung auf

Gemäß der Erfindung ist der Beaufschlagungseinrichtung eine Inspektionseinrichtung zum Inspizieren der Behältnisse nachgeordnet. Insbesondere handelt es sich dabei um eine Inspektionseinrichtung zum Inspizieren der Böden der Behältnisse. Besonders bevorzugt handelt es sich dabei um eine optische Inspektionseinrichtung und insbesondere eine Inspektionseinrichtung, welche eine Bildaufnahmeeinrichtung wie beispielsweise eine Kamera aufweist. Bevorzugt handelt es sich um eine Inspektionseinrichtung, welche die Böden berührungslos im Durchlichtverfahren inspiziert.

Bei einer weiteren vorteilhaften Ausführungsform ist die Transporteinrichtung dazu geeignet und bestimmt, die Behältnisse bodenfrei zu transportieren. Dies bedeutet, dass das Gebläse insbesondere auch einen Boden der Behältnisse zur Abblasung erreichen kann. So kann die Transporteinrichtung bevorzugt eine Vielzahl von Halteelementen aufweisen, welche die Behältnisse nicht an deren Böden greifen, sondern beispielsweise an deren Mündungen etwa unterhalb deren Tragringe. Daneben könnte die Transporteinrichtung auch Halteelemente aufweisen, welche in die Mündungen der Behältnisse eintreten, um diese zu transportieren.

Bei einer weiteren vorteilhaften Ausführungsform ist die Beaufschlagungseinrichtung auf einen Bodenbereich der Behältnisse ausgerichtet. So kann ein Luftstrahl beispielsweise auf den Bodenbereich gerichtet werden, um diesen zu reinigen. Bevorzugt wird ein kurzer Abstand von der Beaufschlagungseinrichtung, etwa einer Düse zu dem zu reinigenden Objekt gewählt, insbesondere ein Abstand, der kleiner ist als 40mm, besonders bevorzugt kleiner als 30mm.

Bei einer weiteren sehr vorteilhaften Ausführungsform ist der Lufterzeuger sehr nahe an der oder den Abblasdüsen angeordnet. Besonders bevorzugt ist die Turbine integraler Bestandteil der Beaufschlagungseinheit. Dies bedeutet insbesondere, dass die Turbine direkt in andere Bestandteil der Beaufschlagungseinheit integriert bzw. mit diesen verbaut ist. Bei einer weiteren bevorzugten Ausführungsform weist die Vorrichtung glattwandige Druckleitungen auf. Bei einer weiteren vorteilhaften Ausführungsform sind diese Druckleitungen kürzer als 400mm.Bevorzugt ist der Lufterzeuger wassergeschützt nach IP67, besonders bevorzugt >IP67, beispielsweise IP69K.

Besonders bevorzugt wird das Gebläse bzw. der Lufterzeuger mit einer Versorgungspannung betrieben, die für Menschen ungefährlich ist, beispielsweise ≤ 25V eff. bzw. DC 60Volt.

Dabei ist es möglich, dass eine Beaufschlagungsrichtung der Luft auf die Behältnisse in der Transportrichtung der Behältnisse erfolgt, es wäre jedoch auch möglich, dass die Beaufschlagung quer zur Transportrichtung erfolgt oder auch entgegen der Transportrichtung. Auch ist es möglich, dass die Beaufschlagungseinrichtung in einem vorgegebenen Winkel bezüglich des Transportpfads der Behältnisse steht, beispielsweise einem Winkel, der zwischen 0 und 90 ° liegt. Generell ist damit ein Aufbau und eine Blasrichtung mit oder gegen die Laufrichtung der Behältnisse möglich oder auch schräg bis hin zu 90 ° zur Laufrichtung.

Bei einer bevorzugten Ausführungsform wird als Antrieb des Gebläses ein bürstenloser Motor eingesetzt. Bevorzugt wird ein hoher Druck erzeugt, um die Abblasgeschwindigkeit zu erhöhen. Bei einer weiteren vorteilhaften Ausführungsform weist die Beaufschlagungseinrichtung Luftleiteinrichtungen auf, welche eine Luftströmung leiten. So kann beispielsweise neben der eigentlichen Abblasung eine Luftleiteinrichtung wie etwa ein Luftleitblech eingesetzt werden. Bevorzugt ist eine derartige Luftleiteinrichtung in einer Strömungsrichtung der Luft nach dem zu beaufschlagenden Behältnis angeordnet. So kann beispielsweise eine Luftleiteinrichtung die Lüftung bzw. die Luft wieder dem Zustrom, ausgehend von dem Gebläse, zuführen. Allgemein ist es bevorzugt, wenn die zum Abblasen verwendete Luft zunächst auf das Behältnis gelangt und dann auf die jeweilige Luftleiteinrichtung.

In einer besonders bevorzugten Ausführungsform wird das Gebläse nur dann aktiviert, wenn Flaschen durch die Behälterbehandlungsmaschine beispielsweise eine Leerflascheninspektionsmaschine oder Vollflascheninspektionsmaschine transportiert werden.

Bei einer weiteren vorteilhaften Ausführungsform weist die Beaufschlagungseinrichtung eine Düseneinrichtung auf. So kann beispielsweise die Beaufschlagungseinrichtung eine Flachdüse oder auch eine Punktdüse aufweisen. Derartige Düsen sind besonders bevorzugt strömungsoptimiert. Auf diese Weise kann eine hohe Luftbeschleunigung in Richtung der Behältnisse durch eine Verengung der Querschnitte erreicht werden. Auch ist es möglich, einen hohen Umluftansauganteil zu erzielen. Besonders bevorzugt weist die Düseneinrichtung einen schmalen Luftaustrittsspalt und insbesondere einen fast oder komplett parallelen engen Luftaustrittsspalt auf.

Bei einer weiteren bevorzugten Ausführungsform weist die Vorrichtung eine Absaugeinrichtung, insbesondere zum Absaugen von von der Beaufschlagungseinrichtung ausgehender Luft auf. Dabei kann diese Absaugeinrichtung insbesondere auch dazu geeignet sein, Flüssigkeiten, Schaum oder dergleichen abzusaugen. Insbesondere ist die Absaugeinrichtung auch dazu geeignet, abgeblasene Flüssigkeit abzusaugen.

Bei einer weiteren bevorzugten Ausführungsform dient das Gebläse auch als Absaugeinrichtung. So wäre es denkbar und bevorzugt, dass eine Saugseite bzw. Saugöffnung des Gebläses zum Absaugen dient. So kann über diese Saugseite die abgeblasene Flüssigkeit und/oder der erzeugte Luftstrom abgesaugt werden.

Besonders bevorzugt ist auch eine Komprimierungseinrichtung vorgesehen, welche derart abgesaugte Luft wieder zum Abblasen komprimiert. Besonders bevorzugt dient also das Gebläse auch zum Komprimieren der abgesaugten Luft.

Wenn, wie oben erwähnt, erfindungsgemäß eine Hochdruckturbine für das Gebläse verwendet wird, können insbesondere durch die hohe Umdrehungszahl dieser Turbine mehrere Effekte erreicht werden. Einerseits wird eine gute Absaugung der Luft erreicht. Daneben kann über die Zentrifugalkraft bzw. Fliehkraft erreicht werden, dass die schweren Wasserbestandteile und/oder Schaumreste nach außen gedrängt und entsprechend abgeleitet werden. Weiterhin kann durch die Verwendung einer Turbine die Luft so stark komprimiert werden, dass mit hoher Blasgeschwindigkeit die Behältnisse sauber geblasen werden können.

Weiterhin wäre es denkbar, dass nach der Beaufschlagung des Behältnisses die Luft über eine Venturi-Anwendung mit einem Wasserablauf abgesaugt wird. Auf diese Weise wäre es auch möglich, Geräte wie etwa einen Zyklonabscheider für Wasser, Schaum oder Verschmutzungen vorzusehen. Daneben wäre es auch möglich, mehrere Düsen zu kombinieren oder auch mehrere Gebläse bei Bedarf mit einer Absaugung zu kombinieren. Auf diese Weise kann ein höherer Trocknungsgrad erreicht werden.

Bei einer weiteren vorteilhaften Ausführungsform weist die Vorrichtung eine Trenneinrichtung auf, um flüssige und Schaumbestandteile voneinander zu trennen. So kann beispielsweise wie oben erwähnt ein Schaumausscheider, Zentrifugalabscheider oder Zyklonabscheider vorgesehen sein.

Vorteilhaft ist die erfindungsgemäße Beaufschlagungseinrichtung auch an bestehenden Anlagen nachrüstbar. Insbesondere ist die hier beschriebene Vorrichtung unmittelbar vor einer Bodeninspektion vorgesehen. So kann eine entsprechende Anlage beispielsweise auch eine Bodenanspritzpunktkühlung aufweisen und die erfindungsgemäße Vorrichtung kann nach dieser Kühleinrichtung vorgesehen sein.

Durch die vorliegende Erfindung wird erreicht, dass kein Druckluftverbrauch entsteht. Auch können wie oben erwähnt saubere Behälter erreicht werden, so werden Fehlausleitungen reduziert, also aussortierte Behälter die nur als Fehlerhaft bewertet wurden wg. noch anhaftendem Schaum oder Wasserrückständen.

Die vorliegende Erfindung ist weiterhin auf ein Verfahren zum Behandeln von Behältnissen gemäß Anspruch 10 gerichtet.

Weitere vorteilhafte Ausführungsformen ergeben sich aus den beigefügten Zeichnungen: Darin zeigen:
- Fig. 1: Eine erste schematische Darstellung einer erfindungsgemäßen Vorrichtung;
- Fig. 2: Eine zweite schematische Darstellung einer erfindungsgemäßen Vorrichtung;
- Fig. 3: Eine Detaildarstellung der in Figur 2 gezeigten Vorrichtung;
- Fig. 4: Eine weitere schematische Darstellung einer erfindungsgemäßen Vorrichtung;
- Fig. 5: Eine schematische Darstellung einer erfindungsgemäßen Vorrichtung mit zwei Beaufschlagungseinrichtungen;
- Fig. 6: Eine Darstellung einer Beaufschlagungseinrichtung;
- Fig. 7: Eine Schnittdarstellung der in Figur 6 gezeigten Beaufschlagungseinrichtung;
- Fig. 8: Eine weitere Darstellung der in Figur 6 gezeigten Beaufschlagungseinrichtung;
- Fig. 9: Eine Darstellung einer erfindungsgemäßen Vorrichtung;
- Fig. 10: Eine schematische Darstellung einer weiteren Ausgestaltung der Erfindung; und
- Fig. 11: Eine schematische Darstellung einer weiteren Ausgestaltung der Erfindung.

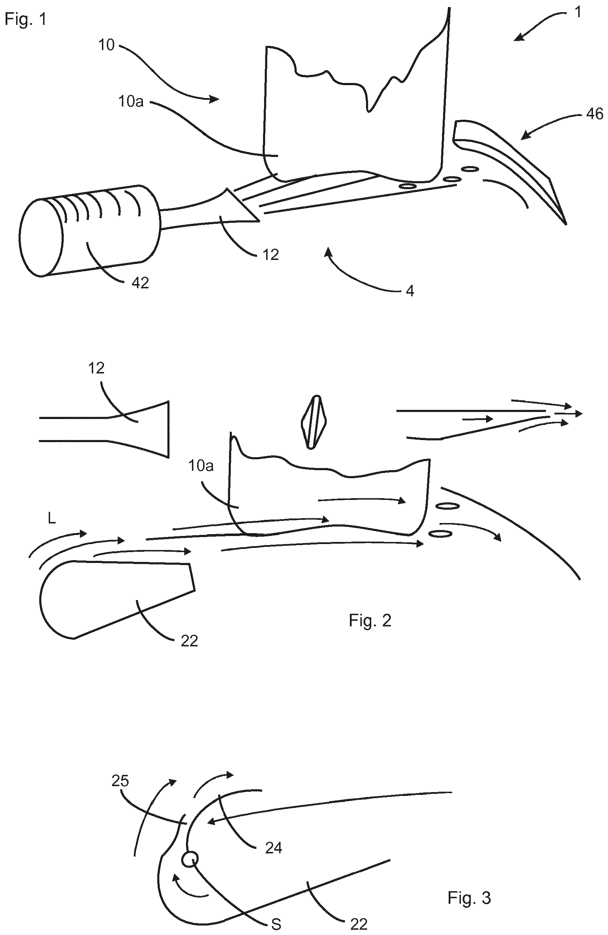

Figur 1 zeigt eine schematische Darstellung einer erfindungsgemäßen Beaufschlagungsvorrichtung 1 für einen Bodenbereich 10a eines Behältnisses 10. Diese weist ein Gebläse 42 auf, welches über eine Düse 12 auf einen Bodenbereich 10a des Behältnisses 10 gerichtet ist. Das Bezugszeichen 46 kennzeichnet ein Leitelement, welches in einer Strömungsrichtung der austretenden Luft nach dem Behältnis 10 angeordnet ist, d.h. welches nach dem Behältnis 10 die entsprechende Luft wieder ableitet bzw. in eine vorgegebene Richtung lenkt.

Figur 2 zeigt eine weitere Ausgestaltung einer erfindungsgemäßen Vorrichtung. Auch hier sind wieder Leitelemente 22 vorgesehen, welche die Luft auf den Bodenbereich 10a des Behältnisses richten. Das Bezugszeichen 12 kennzeichnet auch hier wieder eine Düse, insbesondere eine Flachstrahldüse, welche einen hohen Umluftansaugungsanteil aufweist. Mit der in Figur 2 gezeigten Ausführungsform werden damit mehrere Bereiche des Bodenbereichs 10a mit Luft beaufschlagt. Bevorzugt weisen die Düsen 12 ein strömungsoptimiertes Profil auf, welches insbesondere für eine hohe und höchste Austrittsgeschwindigkeit dient. Insbesondere weisen diese Düsen 12 auch einen engen Austrittsspalt auf.

Die Luftbeschleunigung erfolgt hier durch das in Figur 3 gezeigte Profil des Leitelements 22. Man erkennt an den einzelnen Pfeilen, wie die Luft um das gesamte Element 22 geleitet wird. Durch das Bezugszeichen 22 wird ein schmaler und paralleler Spalt 25 ausgebildet, durch den ein Anteil der Luft treten kann. Das Luftleitelement 24 ist bevorzugt schwenkbar bezüglich einer Schwenkachse 12 angeordnet, um die Leitrichtung und/oder den Strömungsquerschnitt der austretenden Luft verändern zu können

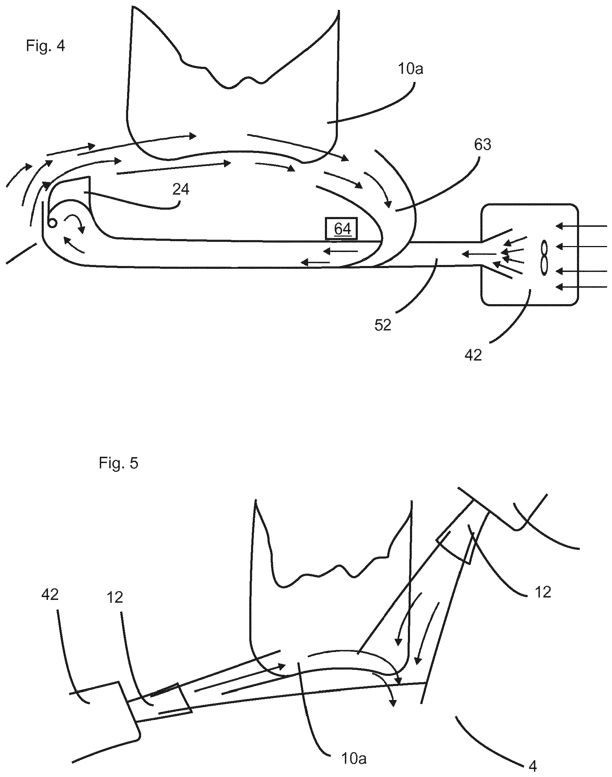

Figur 4 zeigt eine weitere Ausgestaltung der erfindungsgemäßen Vorrichtung. Auch hier ist wieder ein Gebläse 42 vorgesehen sowie ein Luftleitkanal 52, über welchen die Luft letztlich auf das Behältnis bzw. den Bodenbereich 10a des Behältnisses gelangt. Auch hier sind wieder optimierte Austrittsdüsen mit einem hohen Umluftanteil und einer hohen Strömungsgeschwindigkeit vorgesehen. Die Gebläseeinrichtung kann einen unterschiedlichen Antrieb aufweisen, wie beispielsweise Direktantriebe oder elektromotorische Antriebe. Das Bezugszeichen 63 kennzeichnet eine Einspeisung der Luft nachdem sie auf das Behältnis getroffen ist wieder in die Luftleiteinrichtung 52. Dabei kann hier eine Absaugung über eine Venturi-Einspeisung erfolgen, wobei bevorzugt wie oben erwähnt auch ein Zyklonwasser- oder Schmutzabscheider vorgesehen sein kann. Dieser Abscheider trägt in der Figur 4 das Bezugszeichen 64.

Wie ebenfalls in Figur 4 erkennbar, können über die dort gezeigte spezielle Luftführung Bestandteile in der Luft, wie beispielsweise Wasser, Schaum und Verschmutzungen, auch über eine Fliehkraft nach außen abgeschieden werden. Auch der Luftabscheider 64 kann direkt in die Absaugung integriert werden.

Es wäre jedoch auch möglich, die Vorrichtung ohne einen Zyklonabscheider auszuführen, beispielsweise nur mit einem Wasserablauf. Auch könnte die Vorrichtung ohne eine Absaugung ausgeführt sein.

Figur 5 zeigt eine weitere Ausführungsform einer erfindungsgemäßen Vorrichtung. Hier ist eine erste Beaufschlagungseinrichtung bzw. ein erstes Gebläse 42 vorgesehen, sowie ein zweites Gebläse 43. An beiden sind Düsen 12 angeordnet, welche bewirken, dass das Behältnis von zwei unterschiedlichen Richtungen her beaufschlagt wird. Bei dieser Vorgehensweise ist es möglich, dass Flüssigkeiten wie Tropfen leichter von dem Behältnis abreißen. Dabei ist bevorzugt eine Abblasrichtung jeweils gegen die Laufrichtung des Behältnisses. Daneben kann die Abblasrichtung auch bis zu 90° zur Laufrichtung stehen. Daneben können auch wie in Figur 5 gezeigt mehrere Düsen und Düseneinrichtungen in einer Abfolge vorgesehen sein, sodass das Behältnis während seines Transports öfter abgeblasen wird.

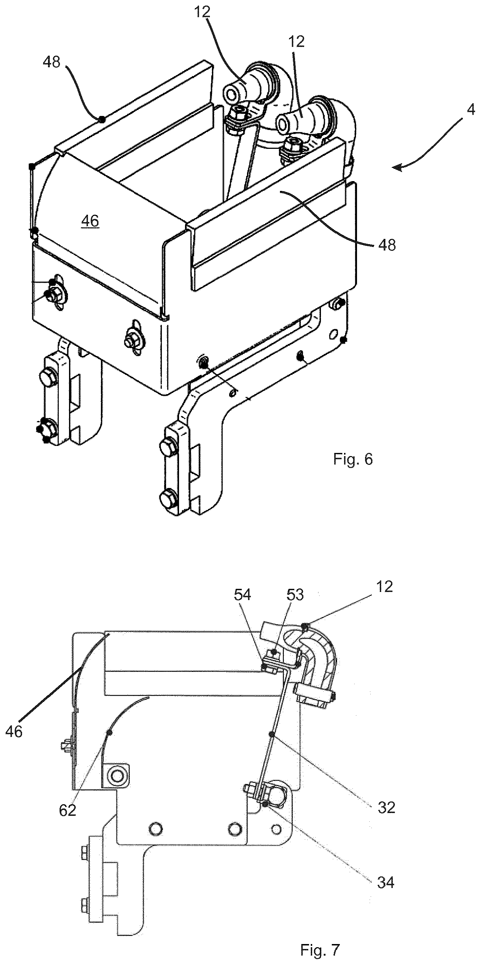

Figur 6 zeigt eine weitere Ausführungsform einer erfindungsgemäßen Vorrichtung. Hier sind wieder die Düsenelemente 12 erkennbar, welche zum Beaufschlagen der Luft dienen. Die Bezugszeichen 48 kennzeichnen Randelemente, welche ebenfalls auch im weitesten Sinne zum Kanalisieren der Luft dienen. Auch hier ist wieder eine Luftlenkeinrichtung vorgesehen, welche die Luft nach dem Beaufschlagen des (nicht gezeigten) Behältnisses weiterleitet.

Figur 7 zeigt eine Schnittdarstellung der in Figur 6 gezeigten Vorrichtung. Auch hier sind wieder die Düsenelemente 12 vorgesehen sowie auch das Luftlenkelement 46. Ein weiteres Luftlenkelement 62 ist vorgesehen, wobei zwischen den beiden Leitelementen 46 und 62 ein Spalt ausgebildet wird, durch den die Luft treten kann. Das Bezugszeichen 32 kennzeichnet einen Träger, der an einem Gelenk 34 angelenkt ist. An diesem Träger ist wiederum über Schraubverbindungen 53 und 54 das Düsenelement 12 angeordnet.

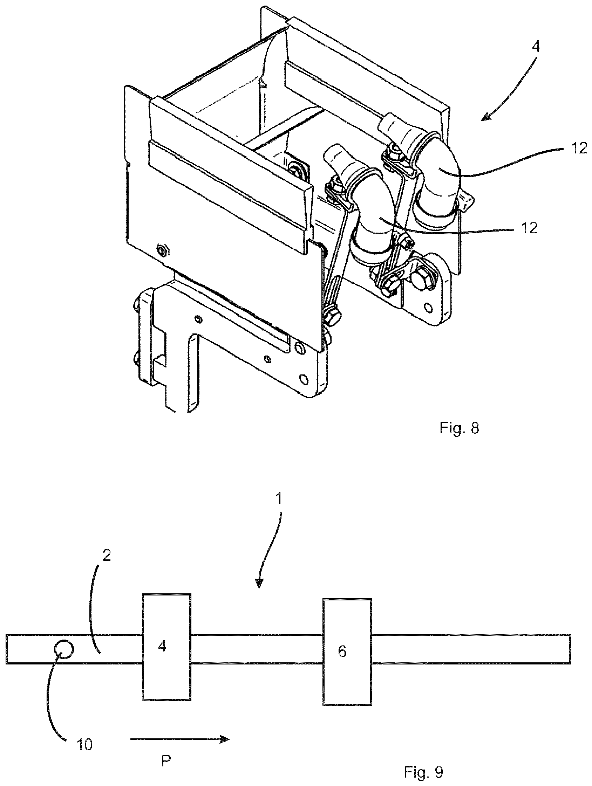

Figur 8 zeigt eine weitere Darstellung der in Figur 6 und 7 gezeigten Vorrichtung. Auch hier erkennt man, dass die Düsenelemente leicht schräg gegenüber den (nicht gezeigten) Behältnissen stehen. Die (nicht gezeigten Behältnisse werden hier entlang des Pfeils P transportiert.

Figur 9 zeigt eine grob schematische Darstellung einer erfindungsgemäßen Vorrichtung. Hier ist eine Transporteinrichtung 2 vorgesehen, welche die Behältnisse 10 entlang eines Transportpfades P transportiert. Das Bezugszeichen 4 kennzeichnet die hier beschriebene Beaufschlagungsvorrichtung und das Bezugszeichen 6 eine dieser in der Transportrichtung P nachgeordnete Inspektionseinrichtung, welche zum Inspizieren der Behältnisse und insbesondere auch der Behältnisböden dient. In Figur 9 ist ein geradliniger Transport der Behältnisse gezeigt, es wäre jedoch auch möglich, dass die Behältnisse entlang eines kreisförmigen Transportpfads transportiert werden.

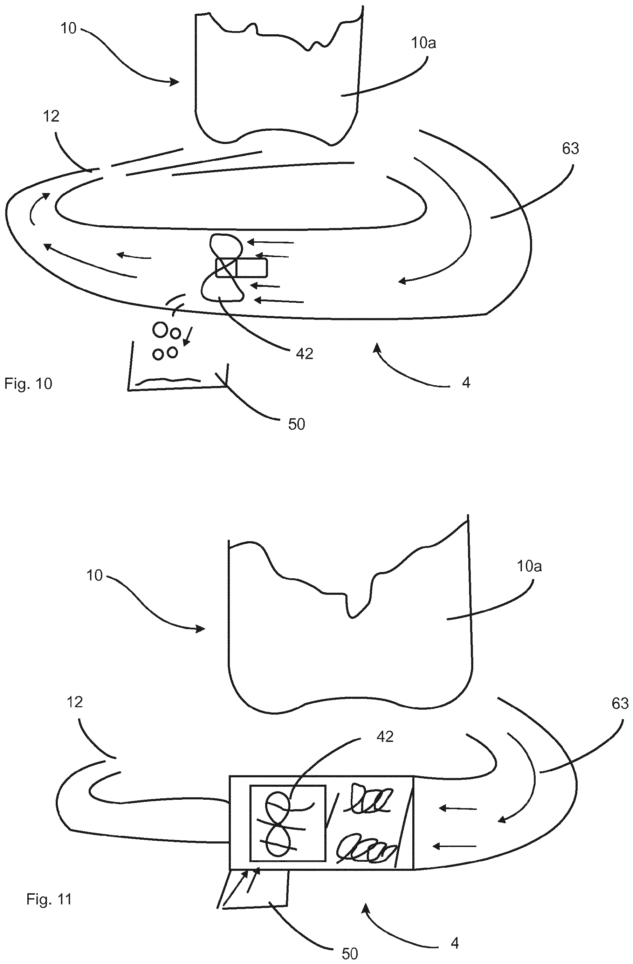

Fig. 10 und Fig. 11 zeigen eine weitere Ausführungsform der erfindungsgemäßen Vorrichtung. Bei dieser Ausgestaltung ist die Hochdruckturbine direkt in die Beaufschlagungseinrichtung bzw. in den Luftkreislauf integriert. Dies bedeutet, dass das Gebläse hier nicht nur Luft an die Behältnisse 10 zuführt sondern auf der anderen Seite auch die Absaugung von Luft übernimmt. So kann das Gebläse 42 etwa direkt in die Luftleitung bzw. die Einspeisung 63 integriert sein.

Bei dieser Ausgestaltung kann auch in besonders vorteilhafter Weise eine Entfeuchtung der Luft vorgenommen werden, etwa indem durch die Fliehkraft Flüssigkeitspartikel aus dem Luftstrom entfernt und bevorzugt zu einer Auffangeinrichtung geleitet werden. Damit bildet bei der in den Fig. 10 und 11 gezeigten Ausgestaltung das Gebläse einen integralen Bestandteil der Beaufschlagungseinrichtung.

### Bezugszeichenliste

- 1: Vorrichtung
- 2: Transporteinrichtung
- 4: Beaufschlagungseinrichtung
- 6: Inspektionseinrichtung
- 10: Behältnis
- 10a: Bodenbereich
- 12: Düse
- 22: Leitelement
- 25: Spalt
- 32: Träger
- 34: Gelenk
- 42: Gebläse
- 43: Gebläse
- 46: Leitelement
- 48: Randelemente
- 52: Luftleitkanal
- 53: Schraubverbindung
- 54: Schraubverbindung
- 62: Luftlenkelement
- 63: Einspeisung
- 64: Abscheider
- P: Transportpfad

## Patentansprüche

1. Vorrichtung zum Behandeln von Behältnissen (10) mit einer Transporteinrichtung (2), welche die Behältnisse entlang eines vorgegebenen Transportpfads transportiert, und mit einer Außenreinigungseinrichtung, welche dazu geeignet und bestimmt ist, wenigstens einen Bereich der Außenoberfläche des Behältnisses (10) zu reinigen, wobei die Außenreinigungseinrichtung eine Beaufschlagungseinrichtung (4) aufweist, **dadurch gekennzeichnet, dass** die Beaufschlagungseinrichtung derart ausgeführt ist, dass sie den Bereich der Außenoberfläche mit Luft beaufschlagt, wobei die Beaufschlagungseinrichtung (4) ein Gebläse (42) aufweist und das Gebläse (42) eine Hochdruckturbine (44) aufweist und der Beaufschlagungseinrichtung (4) eine Inspektionseinrichtung (6) zum Inspizieren der Behältnisse nachgeordnet ist.

2. Vorrichtung (1) nach wenigstens einem der vorangegangenen Ansprüche, **dadurch gekennzeichnet, dass**
die Transporteinrichtung (2) dazu geeignet und bestimmt ist, die Behältnisse bodenfrei zu transportieren.

3. Vorrichtung (1) nach wenigstens einem der vorangegangenen Ansprüche, **dadurch gekennzeichnet, dass**
die Beaufschlagungseinrichtung (4) auf einen Bodenbereich (10a) der Behältnisse (10) ausgerichtet ist.

4. Vorrichtung nach dem vorangegangenen Anspruch,
**dadurch gekennzeichnet, dass**
die Turbine ein integraler Bestandteil der Beaufschlagungseinrichtung ist.

5. Vorrichtung (1) nach wenigstens einem der vorangegangenen Ansprüche, **dadurch gekennzeichnet, dass**.
die Beaufschlagungseinrichtung (4) Luftleiteinrichtungen (46) aufweist, welche eine Luftströmung leiten.

6. Vorrichtung nach dem vorangegangenen Anspruch,
**dadurch gekennzeichnet, dass**
die Luftleiteinrichtungen (46) in einer Strömungsrichtung der Luft nach dem zu beaufschlagenden Behältnis (10) angeordnet ist.

7. Vorrichtung (1) nach wenigstens einem der vorangegangenen Ansprüche, **dadurch gekennzeichnet, dass**
die Beaufschlagungseinrichtung (4) eine Düseneinrichtung (12) aufweist.

8. Vorrichtung (1) nach wenigstens einem der vorangegangenen Ansprüche, **dadurch gekennzeichnet, dass**
die Vorrichtung (1) eine Absaugeinrichtung zum Absaugen von der Beaufschlagungseinrichtung (4) ausgehender Luft aufweist.

9. Vorrichtung (1) nach wenigstens einem der vorangegangenen Ansprüche, **dadurch gekennzeichnet, dass**
das Gebläse mit einer für Menschen ungefährlichen Spannung betreibbar.

10. Verfahren zum Behandeln von Behältnissen (10), wobei die Behältnisse mit einer Transporteinrichtung (2), entlang eines vorgegebenen Transportpfads transportiert werden, und wobei mittels einer Außenreinigungseinrichtung wenigstens ein Bereich der Außenoberfläche des Behältnisses (10) gereinigt wird, **dadurch gekennzeichnet, dass** die Außenreinigungseinrichtung mittels einer Beaufschlagungseinrichtung (4) den Bereich der Außenoberfläche der Behältnisse mit Luft beaufschlagt wobei die Beaufschlagungseinrichtung (4) ein Gebläse aufweist, um die Behältnisse mit Druckluft zu beaufschlagen und das Gebläse (42) eine Hochdruckturbine (44) aufweist und der Beaufschlagungseinrichtung (4) eine Inspektionseinrichtung (6) zum Inspizieren der Behältnisse nachgeordnet ist.

## Claims

1. Apparatus for treating containers (10), having a transport device (2) which transports the containers along a predetermined transport path, and having an external cleaning device which is suitable and intended for cleaning at least one region of the external surface of the container (10), wherein the external cleaning device has an application device (4), **characterized in that**
the pressurization device is designed in such a way that it applies the region of the external surface with air,
wherein the application device (4) has a blower (42) and the blower (42) has a high-pressure turbine (44) and an inspection device (6) for inspecting the containers is arranged downstream of the application device (4).

2. Apparatus (1) according to at least one of the preceding claims, **characterized in that**
the transport device (2) is suitable and intended for transporting the containers bottomless.

3. Apparatus (1) according to at least one of the preceding claims, **characterized in that**
the application device (4) is aligned with a bottom region (10a) of the containers (10).

4. Apparatus according to the preceding claim,
**characterized in that**
the turbine is an integral part of the application device.

5. Apparatus (1) according to at least one of the preceding claims, **characterized in that**
the application device (4) comprises air guiding devices (46) which guide an air flow.

6. Apparatus according to the preceding claim,
**characterized in that**
the air guiding devices (46) are arranged in a flow direction of the air downstream of the container (10) to be acted upon.

7. Apparatus (1) according to at least one of the preceding claims, **characterized in that**
the application device (4) comprises a nozzle device (12).

8. Apparatus (1) according to at least one of the preceding claims, **characterized in that**
the apparatus (1) has a suction device for suctioning air emanating from the application device (4).

9. Apparatus (1) according to at least one of the preceding claims, **characterized in that**
the blower can be operated with a voltage that is harmless to humans.

10. Method for treating containers (10), wherein the containers are transported by a transport device (2) along a predetermined transport path, and wherein at least one region of the outer surface of the container (10) is cleaned by means of an outer cleaning device,
**characterized in that**
the outer cleaning device applies the region of the outer surface of the containers with air by means of an application device (4),
wherein the application device (4) has a blower in order to apply the containers with compressed air and the blower (42) has a high-pressure turbine (44) and an inspection device (6) for inspecting the containers is arranged downstream of the application device (4).

## Revendications

1. Dispositif de traitement de récipients (10) avec un système de transport (2), lequel transporte les récipients le long d'un trajet de transport prédéfini, et avec un système de nettoyage extérieur, lequel est adapté pour et se destine à nettoyer au moins une zone de la surface extérieure du récipient (10), dans lequel le système de nettoyage extérieur présente un système de sollicitation (4),
**caractérisé en ce que**
le système de sollicitation est réalisé de telle manière qu'il soumet la zone de la surface extérieure à l'action de l'air,
dans lequel le système de sollicitation (4) présente une soufflante (42), et la soufflante (42) présente une turbine haute pression (44) et un système d'inspection (6) destiné à inspecter les récipients est disposé en aval du système de sollicitation (4).

2. Dispositif (1) selon au moins l'une quelconque des revendications précédentes,
**caractérisé en ce que**
le système de transport (2) est adapté pour et se destine à transporter sans fond les récipients.

3. Dispositif (1) selon au moins l'une quelconque des revendications précédentes,
**caractérisé en ce que**
le système de sollicitation (4) est orienté sur une zone de fond (10a) des récipients (10).

4. Dispositif selon la revendication précédente,
**caractérisé en ce que**
la turbine fait partie intégrante du système de sollicitation.

5. Dispositif (1) selon au moins l'une quelconque des revendications précédentes,
**caractérisé en ce que**
le système de sollicitation (4) présente des systèmes d'acheminement d'air (46), lesquels acheminent un flux d'air.

6. Dispositif selon la revendication précédente,
**caractérisé en ce que**
les systèmes d'acheminement d'air (46) sont disposés dans une direction d'écoulement de l'air après le récipient (10) à soumettre à une action.

7. Dispositif (1) selon au moins l'une quelconque des revendications précédentes,
**caractérisé en ce que**
le système de sollicitation (4) présente un système de buse (12).

8. Dispositif (1) selon au moins l'une quelconque des revendications précédentes,
**caractérisé en ce que**
le dispositif (1) présente un système d'évacuation par aspiration pour évacuer par aspiration de l'air sortant du système de sollicitation (4).

9. Dispositif (1) selon au moins l'une quelconque des revendications précédentes,
**caractérisé en ce que**
la soufflante peut fonctionner avec une tension ne présentant pas de danger pour l'homme.

10. Procédé de traitement de récipients (10), dans lequel les récipients sont transportés avec un système de transport (2) le long d'une voie de transport prédéfinie, et dans lequel au moins une zone de la surface extérieure du récipient (10) est nettoyée au moyen d'un système de nettoyage extérieur,
**caractérisé en ce que**
le système de nettoyage extérieur soumet la zone de la surface extérieure des récipients à l'action de l'air au moyen d'un système de sollicitation (4),
dans lequel le système de sollicitation (4) présente une soufflante pour soumettre les récipients à l'action d'air comprimé, et la soufflante (42) présente une turbine haute pression (44) et un système d'inspection (6) destiné à inspecter les récipients est disposé en aval du système de sollicitation (4).
